# EUROPÄISCHE PATENTSCHRIFT

(11) **EP 3 530 773 B1**
(45) Veröffentlichungstag und Bekanntmachung des Hinweises auf die Patenterteilung: **07.04.2021**
(21) Anmeldenummer: 18158328.7
(22) Anmeldetag: 23.02.2018
(51) Int. Cl.: B01D 21/01, C23C 2/30, B01D 21/24

(54) **ANLAGE ZUR AUFBEREITUNG VON ZUR STAHLVORBEHANDLUNG EINGESETZTEM FLUSSMITTEL SOWIE VERFAHREN ZUM BETREIBEN DER ANLAGE**
INSTALLATION FOR THE TREATMENT OF FLUX FOR STEEL PRETREATMENT AND METHOD FOR OPERATING THE INSTALLATION
INSTALLATION DE PRÉPARATION D'AGENT FONDANT DESTINÉ AU PRÉTRAITEMENT D'ACIER AINSI QUE PROCÉDÉ DE FONCTIONNEMENT DE L'INSTALLATION

(43) Veröffentlichungstag der Anmeldung: 28.08.2019
(73) Patentinhaber: RAM Engineering + Anlagenbau GmbH, 45894 Gelsenkirchen (DE)
(72) Erfinder: Schmelz, Dr. Frank, 45657 Recklingshausen (DE)
(74) Vertreter: Osterhoff, Utz

(56) Entgegenhaltungen:
- EP-A2- 0 084 478
- AT-B- 402 075
- CA-A1- 2 099 554
- CN-A- 1 974 834
- DE-A1-102004 012 024
- GB-A- 2 039 873
- US-A- 4 871 449

## Beschreibung

Die vorliegende Erfindung betrifft eine Anlage zur Aufbereitung von zur Stahlvorbehandlung eingesetztem Flussmittel gemäß den Merkmalen im Oberbegriff von Anspruch 1.

Die vorliegende Erfindung betrifft weiterhin ein Verfahren zum Betreiben der Anlage gemäß den Merkmalen im Anspruch 9.

Bauteile aus Stahl werden zur gezielten Veränderung ihrer Werkstoffeigenschaften oder wegen ihres optischen Aussehens mit bestimmten anderen metallischen Beschichtungen überzogen. Dies sind beispielsweise Zink-, Blei-, Zinn- oder Aluminiumbeschichtungen. Der Beschichtungsprozess selbst findet durch ein Eintauchen der Stahlteile in ein flüssiges Metallbad mit der gewünschten Zusammensetzung statt.

Ein bekanntes Beschichtungsverfahren ist das Feuerverzinken von Stahl. Hierdurch wird erreicht, dass eine verzinkte Oberfläche auf dem Stahlbauteil bereitgestellt ist. Diese verzinkte Oberfläche ist besonders gut, insbesondere kratz- und abriebsfest mit der Oberfläche des Stahlbauteils verbunden und bildet somit eine Korrosionsschutzbeschichtung aus.

Nach dem Eintauchen der Stahlteile in das Zinkbad reagiert das flüssige Zink mit dem Eisen und bildet entsprechend dem Eisen-Zink-Zustandsdiagramm mehrere Legierungsschichten, welche ein hervorragendes Haften der Zinkschicht auf dem Stahlbauteil gewährleisten. Hierdurch wird insbesondere die Oberfläche des Stahls vor korrosivem Angriff geschützt.

Damit es zu einer Ausbildung der Legierungsschicht zwischen dem Eisen des Stahlbauteils und dem flüssigen Zink kommen kann, ist eine metallisch saubere Oberfläche des zu verzinkenden Stahlbauteils erforderlich. Verschmutzungen, Verunreinigungen oder auch Oxidbeläge verhindern eine Benetzung des Stahls mit Zink und führen dabei zu Verzinkungsfehlern. Hierzu ist es aus dem Stand der Technik bekannt, zur Entfernung von Verunreinigungen eine Beizbehandlung durchzuführen.

Nach dem Verlassen eines Beizbades werden die zu verzinkenden Stahlbauteile in ein Flussmittelbad überführt. Die Aufgabe des Flussmittels ist es, das zu verzinkende Stahlbauteil während des Transportes zum Verzinkungsbad vor erneuter Oxidation zu schützen sowie der Oberfläche des zu verzinkenden Stahlbauteils eine gute Benetzbarkeit für das flüssige Zink zu verleihen. Hierbei werden durch an dem Stahlbauteil anhaftende Reste der Beizbehandlung Eisen in Form von Eisenchloriden in das Flussmittel eingeschleppt, so dass sich das Flussmittel im Laufe der Zeit immer mehr mit Eisenchloriden anreichert. Die im Flussmittel enthaltenen Eisenchloride werden somit auch in das Zinkbad übertragen.

Es ist somit notwendig, das Flussmittel aufzubereiten und insbesondere zu enteisenen.

Hierzu sind aus dem Stand der Technik einige Enteisenungsanlagen von Flussmittelbädern beim Feuerverzinken bekannt. Beispielsweise aus der DE 20 29 580 A oder auch der AT 402 075 B. Ähnliche Anlagen sind auch aus EP 0 084 478 A2 oder CN1974834 A bekannt.

Nachteilig bei den aus dem Stand der Technik bekannten Anlagen sowie Verfahren zu deren Betreiben ist, dass eine relativ aufwendige Anlagentechnik notwendig ist, die im Betrieb mitunter fehleranfällig sein kann und somit einer aufwendigen Regelungs- und Steuerungstechnik bedarf.

Aufgabe der vorliegenden Erfindung ist es, ausgehend vom Stand der Technik eine Möglichkeit aufzuzeigen, ein Flussmittelbad im kontinuierlichen Betrieb aufzubereiten mit einer einfachen Anlagentechnik, die zugleich eine deutlich effektivere Flussmittelaufbereitung durchführt als es mit bisherigem im Stand der Technik bekannten Anlagen möglich ist.

Die zuvor genannte Aufgabe wird erfindungsgemäß mit einer Anlage zur Aufbereitung von zur Stahlvorbehandlung eingesetztem Flussmittel gemäß den Merkmalen im Anspruch 1 gelöst.

Ein verfahrenstechnischer Teil der Aufgabe wird weiterhin mit einem Verfahren zum Betreiben der Anlage mit den Merkmalen im Anspruch 9 gelöst.

Vorteilhafte Ausgestaltungsvarianten der vorliegenden Erfindung sind Gegenstand der abhängigen Ansprüche.

Die Anlage zur Aufbereitung von zur Stahlvorbehandlung eingesetztem Flussmittel kann dabei insbesondere im kontinuierlichen Betrieb an ein Flussmittelbad angeschlossen werden. Dies bedeutet, von einem Flussmittelbad wird das Flussmittel abgezogen und in einen Sedimentationsbehälter überführt. Dies kann mit einer Pumpe erfolgen, jedoch auch aufgrund von Schwerkrafteinwirkung.

Dem Flussmittel wird dann ein Oxidationsmittel beigemischt dergestalt, dass Eisensalze sedimentiert werden und das aufbereitete Flussmittel dem Flussmittelbad wieder zugeführt wird.

Das Oxidationsmittel führt dazu, dass Eisen (II) in Eisen (III) oxidierende Bestandteile umgewandelt wird. In dem Sedimentationsbehälter wird Eisen 3 Hydroxyd ausgefällt.

Erfindungsgemäß zeichnet sich die Anlage dadurch aus, dass in dem Sedimentationsbehälter ein Flussmittel aus einer Flussmittelzuführleitung austritt, deren Austrittsöffnung unterhalb einer Füllstandsoberfläche des Sedimentationsbehälters angeordnet ist, wobei das Flussmittel aus diesem Flussmittelaustritt in Form eines Freistrahls austritt.

Nunmehr ist weiterhin erfindungsgemäß vorgesehen, dass in dem Austrittsbereich des Flussmittels ein Oxidationsmittelaustritt einer Oxidationsmittelleitung angeordnet ist. Dies geschieht derart, dass das Oxidationsmittel in den Freistrahl unmittelbar eingebracht ist. Somit ist auch die Oxidationsmittelleitung unterhalb der Füllstandsoberfläche angeordnet.

Eine Vermischung von Eisenanteilen enthaltenem Flussmittel und Oxidationsmittel wird somit erst in dem Sedimentationsbehälter selbst durchgeführt. Das Einbringen von Flussmittel und Oxidationsmittel findet in dem in dem Sedimentationsbehälter befindlichen Fluid selbst statt. Die Austrittsöffnungen von Flussmittelzuführleitung und Oxidationsmittelzuführleitung sind beide unterhalb einer Füllstandsoberfläche des Sedimentationsbehälters angeordnet.

Dies bringt erfindungsgemäß einige Vorteile mit sich. Zum einen muss nicht erst in einem externen Mischer eine Durchmischung vorgenommen werden, weshalb sich die Anlagentechnik deutlich vereinfacht. Die Reaktion, wenn das Oxidationsmittel in das Eisen enthaltende Flussmittel eingebracht wird, erfolgt direkt und unmittelbar. Dadurch, dass eine Eindüsung bzw. ein Einspritzen des Oxidationsmittels in einen Flussmittelstrom erfolgt, kann diese Reaktion in der nachgelagerten Strömung stattfinden. Vom ersten Kontakt bzw. Durchmischungsort wird somit das Reaktionsgemisch aufgrund der Strömung zunächst entfernt. Durch die aufeinandertreffenden Strömungen sowie den Austritt des Freistrahls aus der Flussmittelzuführleitung findet gleichzeitig eine derartige Turbulenzerzeugung statt, dass eine gute Durchmischung von Flussmittel und Oxidationsmittel stattfindet. Ein weiterer positiver Effekt ist, dass ein Verklumpen bzw. Verkrusten, insbesondere an der Oxidationsmittelzuführleitung, weitestgehend vermieden wird, da die folgende Reaktion durch die Strömung von den Zuführleitungen entfernt stattfindet.

Die Flussmittelzuführleitung aber auch die Oxidationsmittelzuführleitung sind aus Kunststoff ausgebildet, insbesondere aus PP oder PE. Dies bietet den Vorteil, dass die Zuführleitungen einfach und kostengünstig hergestellt werden können. Gleichzeitig weisen die Zuführleitungen aus Kunststoff eine gewisse Restflexibilität auf, so dass bei Ablagerungen oder anhaftenden Verkrustungen durch einfaches händisches Reinigen die Verkrustungen oder Ablagerungen entfernt werden können.

Der Oxidationsmittelaustritt ist unmittelbar unterhalb einer Öffnung des Flussmittelaustritts angeordnet. Das austretende Flussmittel, und hier insbesondere die Strömungsgeschwindigkeit des Flussmittels, erzeugt somit eine Turbulenz in dem Freistrahl, jedoch auch in dem Bereich des Oxidationsmittelaustritts. Durch die Ausströmungsgeschwindigkeit des Flussmittels entstehen hohe Reynoldszahlen, insbesondere größer gleich 1000. Das so eingebrachte, insbesondere eingedüste oder eingespritzte, Oxidationsmittel wird direkt in dem Flussmittelstrom mitgenommen, so dass eine nachfolgende Reaktion weiter im Inneren des Sedimentationsbehälters stattfindet.

Besonders bevorzugt ist ferner der Oxidationsmittelaustritt in einem Winkel von 25° bis 75°, bevorzugt von 40° bis 50°, insbesondere in einem Winkel von 46° bis 47° und ganz besonders bevorzugt von etwa 45° zu dem Flussmittelaustritt angeordnet. Hierdurch ist es möglich, eine besonders gute Durchmischung von Flussmittel und Oxidationsmittel zu erreichen. Gleichzeitig nimmt der Flussmittelstrom das Oxidationsmittel in seiner Strömungsrichtung mit, so dass in der Oxidationsmittelleitung keine Ablagerungen oder Verkrustungen auftreten.

Für übliche aus dem Stand der Technik auftretende Flussmittelbecken hat sich ein Volumen des Sedimentationsbehälters von 0,5 bis 4 m³, insbesondere 1,2 bis 2,5 m³ und besonders bevorzugt von 1,4 bis 1,8 m³ als vorteilig erwiesen. Die Anlagengröße ist somit relativ kompakt, gleichzeitig jedoch die Möglichkeit zur kontinuierlichen Flussmittelaufbereitung auch im Dauerbetrieb des Flussmittelbades hinreichend gegeben.

Die vorliegende Erfindung betrifft somit auch das Verfahren zum Betreiben der Anlage. Das Flussmittel wird mit einem Freistrahl aus dem Flussmittelaustritt in das in dem Sedimentationsbehälter bereits befindliche Flussmittel eingebracht. Der Flussmittelaustritt ist dabei unterhalb einer Oberfläche des in dem Sedimentationsbehälter befindlichen Flussmittels. In den Freistrahl wird dann das Oxidationsmittel eingebracht. Bei diesem Einbringen handelt es sich insbesondere um ein Eindüsen oder Einspritzen. Die Strömungsgeschwindigkeit des Oxidationsmittels kann kleiner als die des Flussmittels sein.

Im Anschluss daran findet eine Reaktion von dem im Flussmittel enthaltenden Eisen mit dem Oxidationsmittel statt, so dass es zu einer Enteisenung des Flussmittels kommt. Insbesondere wird das Eisen in dem Sedimentationsbehälter ausgefällt und sedimentiert.

Die festen und gefällten Stoffe sinken auf den Grund des Sedimentationsbehälters. Hier kann es abgesaugt werden und beispielsweise durch eine Filterpresse geführt werden. Das Absaugen kann kontinuierlich oder diskontinuierlich, je nach Bedarf, erfolgen. Insbesondere kann hier wiederum der Absaugprozess derart gesteuert werden, dass die Füllstandsoberfläche des Sedimentationsbehälters maximal derart absinkt, dass jedoch der Flussmittelaustritt und der Oxidationsmittelaustritt immer noch unterhalb der Füllstandsoberfläche liegen.

Insbesondere kann die Oxidationsmittelleitung mit einer mechanischen Koppelung, beispielsweise mit einer Clipbefestigung, seitlich an der Flussmittelzuführleitung gekoppelt sein. Zu Wartungs- oder Revisionszwecken können die beiden Leitungen voneinander getrennt werden und durch einfaches mechanisches Reinigen können eventuelle Verschmutzungen gelöst werden.

Es hat sich als weiterhin besonders vorteilig erwiesen, wenn die Flussmittelzuführleitung einen Innendurchmesser von 10 bis 40 mm, bevorzugt 15 bis 30 mm, insbesondere 28 bis 29 mm aufweist sowie die Oxidationsmittelzuführleitung einen Innendurchmesser von 1 bis 8 mm, bevorzugt 2 bis 6 mm und insbesondere 4 mm aufweist. Wird eine bereits angemaischte Lösung als Oxidationsmittel verwendet, so ist insbesondere die Oxidationsmittelzuführleitung größer und beträgt einen Innendurchmesser von 5 bis 25 mm, bevorzugt 10 bis 20 mm, insbesondere 14 bis 18 mm.

Der Vorteil ist, dass hier auf Standardrohre zurückgegriffen werden kann, so dass die Kosten zum Erstellen der Anlage weiter sinken.

Weiterhin besonders vorteilig kann dann das Flussmittel mit einem Volumenstrom von 500 bis 1800, insbesondere von 800 bis 1600, besonders bevorzugt von 800 bis 1000 l/h (Liter pro Stunde) in den Sedimentationsbehälter eingebracht werden. Insbesondere kann hiermit eine Austrittsgeschwindigkeit von 0,2 bis 8 m/s, bevorzugt 0,5 bis 3 m/s, insbesondere 1 bis 2 m/s erreicht werden, so dass sich eine turbulente Strömung am Flussmittelaustritt bildet. Hierbei findet dann eine bessere Durchmischung mit dem nachfolgend direkt in den Freistrahl eingespritzten Oxidationsmittel statt und dadurch bedingt eine besser ablaufende Reaktion in dem Sedimentationsbehälter. Auf zusätzliche Rühreinrichtungen oder sonstige Volumenstromerzeugungen in dem Sedimentationsbehälter kann erfindungsgemäß verzichtet werden.

Das Oxidationsmittel wird weiterhin bevorzugt mit einem Volumenstrom von 0,5 bis 3,0, insbesondere 0,8 bis 2,6 l/h (Liter pro Stunde) in den Freistrahl eingebracht. Eine Variation des Oxidationsmittelstroms kann insbesondere in Abhängigkeit von gemessenem Eisengehalt in dem Flussmittel angepasst werden, so dass auch bei stark eisenhaltigem Flussmittel eine hinreichende Enteisenung stattfinden kann und die Anlage weiterhin im kontinuierlichen Durchlaufbetrieb betrieben werden kann. Es ergeben sich insbesondere dann Strömungsgeschwindigkeiten des Oxidationsmittels von 0,02 bis 1 m/s, bevorzugt 0,04 bis 0,06 m/s und insbesondere von ca. 0,05 m/s. Wird eine angemaischte Lösung als Oxidationsmittel eingesetzt, ergeben sich geringfügig größere Strömungsgeschwindigkeiten von 0,01 bis 2 m/s, insbesondere 0,02 bis 1 m/s und ebenso wiederum 0,05 m/s. Bei der angemaischten Lösung wird jedoch ein größerer Innendurchmesser der Oxidationsmittelzuführleitung verwendet, so dass die geringfügig höhere Strömungsgeschwindigkeit durch einen größeren Volumenstrom erzeugt wird. Dieser liegt bei der angemaischten Lösung bei 0,002 bis 0,05 m³/h, insbesondere bei ca. 0,015 m³/h, was ca. 2 bis 32 l/h entspricht.

Optional kann weiterhin vorgesehen sein, dass in der Flussmittelzuführleitung der pH-Wert des Flussmittels überwacht wird, insbesondere gemessen, und eingestellt wird, durch Zugabe eines Additivs, beispielsweise einer wässrigen Ammoniaklösung.

Weiterhin ist vorgesehen, dass in der Flussmittelzuführleitung eine Durchflussmessung angeordnet ist, beispielsweise als Schwebekörperdurchflussmesser. Hier kann über Sicherheitsmaßnahmen, beispielsweise einen Magnetabschalter, somit erkannt werden, dass hinreichend Flussmittel aus dem Flussmittelbad dem Sedimentationsbehälter zugeführt wird, so dass die hier beschriebene Anlage im kontinuierlichen Durchlaufbetrieb laufen kann.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren erläutert. Diese dienen dem einfacheren Verständnis der Erfindung. Es zeigen:
- Figur 1: eine erfindungsgemäße Anlage in schematischer Ansicht und
- Figur 2: eine Detailansicht auf den Austritt von Flussmittel und Oxidationsmittel.

In den Figuren werden für gleiche oder ähnliche Bauteile dieselben Bezugszeichen verwendet, auch wenn eine wiederholte Beschreibung aus Vereinfachungsgründen entfällt.

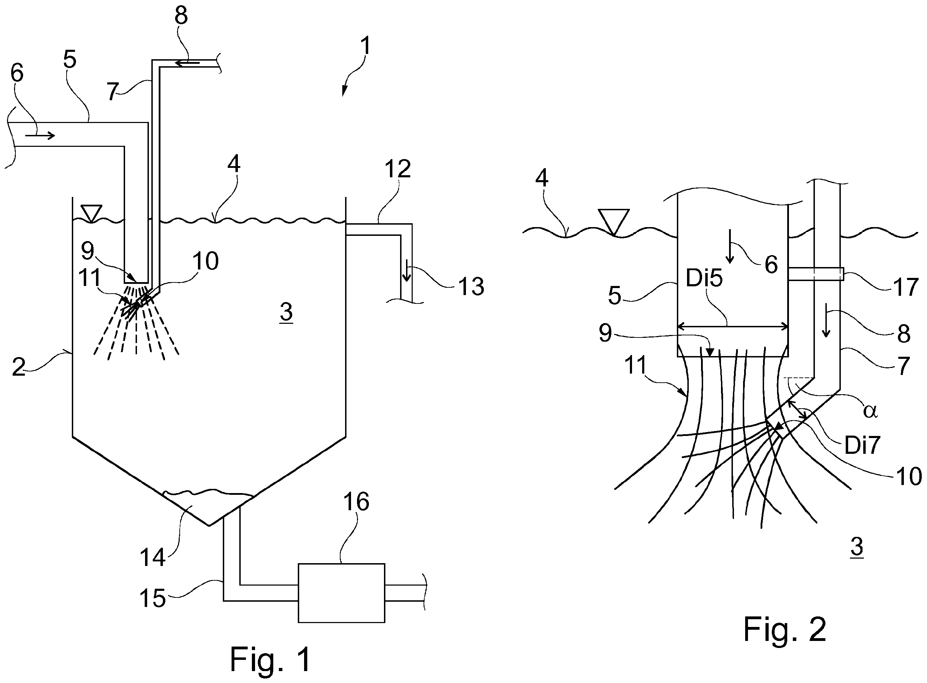

Figur 1 zeigt eine erfindungsgemäße Anlage 1. Diese weist einen Sedimentationsbehälter 2 auf, wobei in dem Sedimentationsbehälter 2 Flussmittel 3 zur Aufbereitung vorhanden ist. Dieses Flussmittel 3 weist eine Füllstandsoberfläche 4 auf, die sich im oberen Bereich des Sedimentationsbehälters 2 befindet. Über eine Flussmittelzuführleitung 5 wird dem Sedimentationsbehälter 2 kontinuierlich neues Flussmittel 6 von einem nicht näher dargestellten Flussmittelbad zugeführt. Dieses Flussmittel 6 weist Eisenanteile auf und wird durch die Flussmittelzuführleitung 5 mit einem Volumenstrom von bevorzugt 800 bis 1000 l/h in den Sedimentationsbehälter 2 zugeführt. Über eine Oxidationsmittelzuführleitung 7 wird Oxidationsmittel 8 zugeführt, beispielsweise Wasserstoffperoxid (H₂O₂). Ein Flussmittelaustritt 9, jedoch auch ein Oxidationsmittelaustritt 10, die sich jeweils am Ende der Flussmittelzuführleitung 5 sowie der Oxidationsmittelzuführleitung 7 befinden, sind jeweils unterhalb der Füllstandsoberfläche 4 angeordnet. Das Flussmittel 6 tritt somit mit einem Freistrahl 11 aus in das in dem Sedimentationsbehälter 2 befindliche Flussmittel 3. Das Oxidationsmittel 8 wird in diesen Freistrahl 11 direkt eingebracht, insbesondere eingedüst. Über eine Flussmittelabführleitung 12 wird das so aufbereitete Flussmittel 13 insbesondere in einem oberen Bereich des Sedimentationsbehälters 2 abgeführt und einem nicht näher dargestellten Flussmittelbad wiederum zugeführt.

Am Boden des Sedimentationsbehälters 2 fallen nicht gelöste Eisenverbindungen aus, insbesondere in Form von Schlamm 14. Dies kann über eine Abführleitung 15 abgeführt werden und beispielsweise durch eine Filterpresse 16 geführt werden. Die separierten Feststoffe können dann einer anderen Verwendung zugeführt werden und das in der Filterpresse 16 herausgefilterte Flussmittel wird dem Flussmittelbecken wieder zugeführt.

Figur 2 zeigt eine Detailansicht der Flussmittelzuführleitung 5 sowie der daran angeordneten Oxidationsmittelzuführleitung 7. Die Oxidationsmittelzuführleitung 7 ist über eine Clipverbindung 17 an die Flussmittelzuführleitung 5 gekoppelt. Das Flussmittel 6 wird durch die Flussmittelzuführleitung 5 unterhalb der Füllstandsoberfläche 4 in das in dem Sedimentationsbehälter 2 befindliche Flussmittel 3 überführt und tritt hier mit einem sich in Strömungsrichtung verbreiternden Freistrahl 11 aus.

Zunächst ergibt sich eine Einschnürung, so dass insbesondere in dem Freistrahl 11 selbst eine Turbulenz erzeugt wird. Die Flussmittelzuführleitung 5 weist einen Innendurchmesser Di5 auf. Die Oxidationsmittelzuführleitung 7 weist ebenfalls einen Innendurchmesser Di7 auf.

Der letzte Teil der Oxidationsmittelzuführleitung 7 ist abgewinkelt ausgebildet in einem Winkel α von bevorzugt 40° bis 50°, insbesondere 45°. Der Oxidationsmittelaustritt bzw. die Oxidationsmittelaustrittsöffnung befindet sich in dem Freistrahl 11. Insbesondere ist diese unterhalb des Flussmittelaustritts 9 angeordnet. Dies erfolgt insbesondere derart, dass das Oxidationsmittel 8 direkt in den Freistrahl 11 eingedüst wird und von der Strömung des Freistrahls 11 mitgenommen wird. Es entsteht somit eine Sogwirkung durch den Freistrahl 11, so dass keine Reaktion von Flussmittel 3 und Oxidationsmittel 8 in der Oxidationsmittelzuführleitung 7 stattfinden kann. Ein Verklumpen bzw. Anhaften wird hierdurch effektiv vermieden, so dass die Prozess- und insbesondere Reinigungskosten gesenkt werden.

### Bezugszeichen:

- 1 -: Anlage
- 2 -: Sedimentationsbehälter
- 3 -: Flussmittel
- 4 -: Füllstandsoberfläche
- 5 -: Flussmittelzuführleitung
- 6 -: Flussmittel
- 7 -: Oxidationsmittelzuführleitung
- 8 -: Oxidationsmittel
- 9 -: Flussmittelaustritt
- 10-: Oxidationsmittelaustritt
- 11 -: Freistrahl
- 12-: Flussmittelabführleitung
- 13 -: aufbereitetes Flussmittel
- 14-: Schlamm
- 15 -: Abführleitung zu 14
- 16-: Filterpresse
- 17-: Clipverbindung

- Di5 -: Innendurchmesser zu 5
- Di7 -: Innendurchmesser zu 7
- α-: Winkel

## Patentansprüche

1. Flussmittelaufbereitungsanlage (1) zur Aufbereitung von zur Stahlvorbehandlung eingesetztem Flussmittel (3), aufweisend einen Sedimentationsbehälter (2) und ein Flussmittelbad, wobei das Flussmittel (3) dem Flussmittelbad abgezogen wird und in dem Sedimentationsbehälter (2) überführt wird und ein Oxidationsmittel (8) dem Flussmittel (3) beigemischt wird, dergestalt, dass Eisenhydroxide sedimentiert werden und das aufbereitete Flussmittel (13) dem Flussmittelbad wieder zugeführt wird, **dadurch gekennzeichnet, dass** in dem Sedimentationsbehälter (2) ein Flussmittelaustritt (9) einer Flussmittelzuführleitung (5) unterhalb einer Füllstandsoberfläche (4) des Sedimentationsbehälters (2) angeordnet ist und das Flussmittel (6) aus diesem in Form eines Freistrahls (11) austritt und dass in dem Austrittsbereich (9) des Flussmittels (6) ein Oxidationsmittelaustritt (10) des Oxidationsmittels (8) angeordnet ist und dass eine Öffnung des Oxidationsmittelaustritts (10) unterhalb einer Öffnung des Flussmittelaustritts (9) angeordnet ist, dergestalt, dass Oxidationsmittelaustritt (10) und Flussmittelaustritt (9) unterhalb einer Füllstandsoberfläche (4) des Sedimentationsbehälter (2) angeordnet sind.

2. Anlage (1) nach Anspruch 1, **dadurch gekennzeichnet, dass** die Flussmittelzuführleitung (5) und/oder die Oxidationsmittelzuführleitung (7) aus Kunststoff ausgebildet sind, insbesondere aus PP oder PE.

3. Anlage (1) nach Anspruch 1 oder 2, **dadurch gekennzeichnet, dass** in der Flussmittelzuführleitung (5) eine Durchflussmesseinrichtung angeordnet ist, insbesondere ein Schwebekörperdurchflussmesser.

4. Anlage (1) nach einem der Ansprüche 1 bis 3, **dadurch gekennzeichnet, dass** der Oxidationsmittelaustritt (10) in einem Winkel (a) von 25° bis 75°, bevorzugt von 40° bis 50°, insbesondere in einem Winkel (a) von 45° zu dem Flussmittelaustritt (9) angeordnet ist.

5. Anlage(1) nach einem der Ansprüche 1 bis 4, **dadurch gekennzeichnet, dass** der Sedimentationsbehälter (2) ein Aufnahmevolumen von 0,5 bis 4m³, insbesondere von 1 bis 2,5m³ und besonders bevorzugt von 1,4 bis 1,8m³ aufweist.

6. Anlage (1) nach einem der Ansprüche 1 bis 5, **dadurch gekennzeichnet, dass** die Flussmittelzuführleitung (5) einen Innendurchmesser (Di5) von 10 bis 40 mm aufweist und/oder dass die Oxidationsmittelzuführleitung (7) einen Innendurchmesser (Di7) von 1 bis 20 mm, bevorzugt 1 bis 6 mm aufweist.

7. Anlage (1) nach einem der Ansprüche 1 bis 6, **dadurch gekennzeichnet, dass** die Oxidationsmittelzuführleitung (7) mittels einer Clipbefestigung (17) seitlich an die Flussmittelzuführleitung (5) gekoppelt ist.

8. Anlage (1) nach einem der Ansprüche 1 bis 7, **dadurch gekennzeichnet, dass** das aufbereitete Flussmittel (13) im Bereich einer Füllstandoberfläche (4) abgenommen und dem Flussmittelbad wieder zugeführt wird.

9. Verfahren zum Betreiben einer Anlage (1) mit den Merkmalen von Anspruch 1, **dadurch gekennzeichnet, dass** das Flussmittel (6) mit einem Freistrahl (11) aus dem Flussmittelaustritt (9) in das in dem Sedimentationsbehälter (2) befindliche Flussmittel (3) austritt und in den Freistrahl (11) das Oxidationsmittel (8) eingebracht wird.

10. Verfahren nach Anspruch 9, **dadurch gekennzeichnet, dass** das Oxidationsmittel (8) in einem Winkel (a) von 40° bis 50°, insbesondere 45° seitlich in den Freistrahl (11) eingebracht wird.

11. Verfahren nach Anspruch 9 oder 10, **dadurch gekennzeichnet, dass** ein Oxidationsmittelaustritt (10) in dem Freistrahl (11) angeordnet ist.

12. Verfahren nach einem der Ansprüche 9 bis 11, **dadurch gekennzeichnet, dass** das Flussmittel (3) mit einem Volumenstrom von 500 bis 1800, insbesondere von 800 bis 1600 und besonders bevorzugt von 800 bis 1000 l/h in den Sedimentationsbehälter (2) eingebracht wird.

13. Verfahren nach einem der Ansprüche 9 bis 12, **dadurch gekennzeichnet, dass** das Oxidationsmittel (8) mit einem Volumenstrom von 0,5 bis 3,0, insbesondere 0,8 bis 2,6 l/h in den Freistrahl (11) eingebracht wird oder dass ein angemaischtes Oxidationsmittel mit einem Volumenstrom von 2 bis 32 l/h in den Freistrahl (11) eingebracht wird.

14. Verfahren nach einem der Ansprüche 9 bis 13, **dadurch gekennzeichnet, dass** in der Flussmittelzuführleitung (5) der pH-Wert des Flussmittels (3) überwacht wird und eingestellt wird, durch Zugabe eines Additives oder dass ein Oxidationsmittel (8) in einer angemaischten Lösung verwendet wird.

## Claims

1. Flux-processing system (1) for processing flux (3) used for pretreating steel, having a sedimentation container (2) and a flux bath, wherein the flux (3) is taken off the flux bath and is transferred into the sedimentation container (2) and an oxidising agent (8) is added to the flux (3), such that iron hydroxides are sedimented and the processed flux (13) is supplied back to the flux bath, **characterised in that** in the sedimentation container (2) a flux outlet (9) of a flux supply line (5) is arranged below a filling level surface (4) of the sedimentation container (2) and the flux (6) exits the latter in the form of an open jet (11) and **in that** in the outlet region (9) of the flux (6) an oxidising agent outlet (10) of the oxidising agent (8) is arranged, and **in that** an opening of the oxidising agent outlet (10) is arranged below an opening of the flux outlet (9), such that the oxidising agent outlet (10) and flux outlet (9) are arranged below a filling level surface (4) of the sedimentation container (2).

2. System (1) according to claim 1, **characterised in that** the flux supply line (5) and/or the oxidising agent supply line (7) are made of plastic, in particular PP or PE.

3. System (1) according to claim 1 or 2, **characterised in that** in the flux supply line (5) a flow measuring device is arranged, in particular a float-type flow meter.

4. System (1) according to any of claims 1 to 3, **characterised in that** the oxidising agent outlet (10) is arranged at an angle (a) of 25° to 75°, preferably 40° to 50°, in particular at an angle (a) of 45° to the flux outlet (9).

5. System (1) according to any of claims 1 to 4, **characterised in that** the sedimentation container (2) has a capacity of 0.5 to 4 m³, in particular 1 to 2.5 m³ and particularly preferably 1.4 to 1.8 m³.

6. System (1) according to any of claims 1 to 5, **characterised in that** the flux supply line (5) has inner diameter (Di5) of 10 to 40 mm and/or **in that** the oxidising agent supply line (7) has an inner diameter (Di7) of 1 to 20 mm, preferably 1 to 6 mm.

7. System (1) according to any of claims 1 to 6, **characterised in that** the oxidising agent supply line (7) is coupled by means of a clip fastening (17) laterally to the flux supply line (5).

8. System (1) according to any of claims 1 to 7, **characterised in that** the processed flux (13) is taken off in the region of a filling level surface (4) and is returned back to the flux bath.

9. Method for operating a system (1) having the features of claim 1,
**characterised in that** the flux (6) is discharged as an open jet (11) from the flux outlet (9) into the flux (3) located in the sedimentation container (2) and the oxidising agent (8) is introduced into the open jet (11).

10. Method according to claim 9, **characterised in that** the oxidising agent (8) is introduced laterally into the open jet (11) at an angle (a) of 40° to 50°, in particular 45°.

11. Method according to claim 9 or 10, **characterised in that** an oxidising agent outlet (10) is arranged in the open jet (11).

12. Method according to any of claims 9 to 11, **characterised in that** the flux (3) is introduced at a volumetric flow rate of 500 to 1800, in particular 800 to 1600 and particularly preferably 800 to 1000 l/h into the sedimentation container (2).

13. Method according to any of claims 9 to 12, **characterised in that** the oxidising agent (8) is introduced at a volumetric flow rate of 0.5 to 3.0, in particular 0.8 to 2.6 l/h into the open jet (11) or **in that** a mashed oxidising agent is introduced at a volumetric flow rate of 2 to 32 l/h into the open jet (11).

14. Method according to any of claims 9 to 13, **characterised in that** in the flux supply line (5) the pH-value of the flux (3) is monitored and is adjusted by the addition of an additive or **in that** an oxidising agent (8) is used in a mashed solution.

## Revendications

1. Installation de traitement de flux (1) pour le traitement d'un flux (3) utilisé pour le prétraitement d'acier, présentant un récipient de sédimentation (2) et un bain de flux, dans laquelle le flux (3) est extrait du bain de flux et est transféré dans le récipient de sédimentation (2) et un oxydant (8) est ajouté au flux (3), de telle sorte que des hydroxydes de fer sont sédimentés et le flux traité (13) est réintroduit dans le bain de flux, **caractérisée en ce que** dans le récipient de sédimentation (2) une sortie de flux (9) d'une conduite d'alimentation de flux (5) est disposée en dessous d'une surface de niveau de remplissage (4) du récipient de sédimentation (2) et le flux (6) sort de celui-ci sous forme d'un jet libre (11) et **en ce qu'**une sortie d'oxydant (10) de l'oxydant (8) est disposée dans la zone de sortie (9) du flux (6) et **en ce qu'**une ouverture de la sortie d'oxydant (10) est disposée en dessous d'une ouverture de la sortie de flux (9), de telle sorte que la sortie d'oxydant (10) et la sortie de flux (9) sont disposées en dessous d'une surface de niveau de remplissage (4) du récipient de sédimentation (2).

2. Installation (1) selon la revendication 1, **caractérisée en ce que** la conduite d'alimentation de flux (5) et/ou la conduite d'alimentation d'oxydant (7) sont conçues en matière plastique, en particulier en PP ou PE.

3. Installation (1) selon la revendication 1 ou 2, **caractérisée en ce qu'**un appareil de mesure de débit est disposé dans la conduite d'alimentation de flux (5), en particulier un débitmètre à corps flottant.

4. Installation (1) selon l'une quelconque des revendications 1 à 3, **caractérisée en ce que** la sortie d'oxydant (10) est disposée selon un angle (a) allant de 25 ° à 75 °, de préférence de 40 ° à 50 °, en particulier selon un angle (a) de 45 °par rapport à la sortie de flux (9).

5. Installation(1) selon l'une quelconque des revendications 1 à 4, **caractérisée en ce que** le récipient de sédimentation (2) présente un volume de réception allant de 0,5 à 4 m³, en particulier de 1 à 2,5 m³ et le plus préférentiellement de 1,4 à 1,8 m³.

6. Installation (1) selon l'une quelconque des revendications 1 à 5, **caractérisée en ce que** la conduite d'alimentation de flux (5) présente un diamètre intérieur (Di5) allant de 10 à 40 mm et/ou **en ce que** la conduite d'alimentation d'oxydant (7) présente un diamètre intérieur (Di7) allant de 1 à 20 mm, de préférence 1 à 6 mm.

7. Installation (1) selon l'une quelconque des revendications 1 à 6, **caractérisée en ce que** la conduite d'alimentation d'oxydant (7) est couplée au moyen d'une fixation à clip (17) latéralement à la conduite d'alimentation de flux (5).

8. Installation (1) selon l'une quelconque des revendications 1 à 7, **caractérisée en ce que** le flux traité (13) est prélevé dans la zone d'une surface de niveau de remplissage (4) et est réintroduit dans le bain de flux.

9. Procédé de fonctionnement d'une installation (1) présentant les caractéristiques de la revendication 1, **caractérisé en ce que** le flux (6) sort avec un jet libre (11) de la sortie de flux (9) dans le flux (3) se trouvant dans le récipient de sédimentation (2) et l'oxydant (8) est introduit dans le jet libre (11).

10. Procédé selon la revendication 9, **caractérisé en ce que** l'oxydant (8) est introduit selon un angle (a) allant de 40 ° à 50 °, en particulier 45 ° latéralement dans le jet libre (11).

11. Procédé selon la revendication 9 ou 10, **caractérisé en ce qu'**une sortie d'oxydant (10) est disposée dans le jet libre (11).

12. Procédé selon l'une quelconque des revendications 9 à 11, **caractérisé en ce que** le flux (3) est introduit avec un débit volumique allant de 500 à 1800, en particulier de 800 à 1600 et le plus préférentiellement de 800 à 1000 l/h dans le récipient de sédimentation (2).

13. Procédé selon l'une quelconque des revendications 9 à 12, **caractérisé en ce que** l'oxydant (8) est introduit avec un débit volumique allant de 0,5 à 3,0, en particulier 0,8 à 2,6 l/h dans le jet libre (11) ou **en ce qu'**un oxydant mélangé avec un débit volumique allant de 2 à 32 l/h est introduit dans le jet libre (11).

14. Procédé selon l'une quelconque des revendications 9 à 13, **caractérisé en ce que** le pH du flux (3) est surveillé et ajusté dans la conduite d'alimentation de flux (5), par l'ajout d'un additif ou **en ce qu'**un oxydant (8) est utilisé dans une solution mélangée.
